# EUROPÄISCHE PATENTSCHRIFT

(11) **EP 0 939 206 B1**
(45) Veröffentlichungstag und Bekanntmachung des Hinweises auf die Patenterteilung: **18.09.2002**
(21) Anmeldenummer: 99103702.9
(22) Anmeldetag: 25.02.1999
(51) Int. Cl.: F01N 3/20

(54) **Vorrichtung zur Reduzierung des NOx-Gehaltes im Abgas einer Brennkraftmaschine**
Device for reducing nitrogen oxide content in exhaust gases of internal combustion engines
Dispositif pour la reduction de l'émission de NOx dans le gaz d'échappement des moteurs à combustion interne

(30) Priorität: 25.02.1998 DE 19807935
(43) Veröffentlichungstag der Anmeldung: 01.09.1999
(73) Patentinhaber: SIEMENS AKTIENGESELLSCHAFT, 80333 München (DE)
(72) Erfinder: Zürbig, Jürgen, Dr., 96224 Burgkunstadt (DE); Tost, Rainer, 90427 Nürnberg (DE); Dölling, Winfried, 96369 Weissenbrunn (DE); Latsch, Reinhard, Dr., 74889 Sinsheim (DE)

(56) Entgegenhaltungen:
- DE-A- 4 237 705
- PATENT ABSTRACTS OF JAPAN vol. 004, no. 139 (M-034), 30. September 1980 (1980-09-30) & JP 55 093917 A (UNITIKA LTD), 16. Juli 1980 (1980-07-16)
- PATENT ABSTRACTS OF JAPAN vol. 010, no. 049 (C-330), 26. Februar 1986 (1986-02-26) & JP 60 197225 A (MITSUBISHI JUKOGYO KK), 5. Oktober 1985 (1985-10-05)
- PATENT ABSTRACTS OF JAPAN vol. 1996, no. 11, 29. November 1996 (1996-11-29) & JP 08 168639 A (BABCOCK HITACHI KK), 2. Juli 1996 (1996-07-02)

## Beschreibung

Die Erfindung betrifft eine Vorrichtung zur Verringerung des NOₓ-Gehaltes im Abgas einer mit Luftüberschuß betriebenen Brennkraftmaschine gemäß dem Oberbegriff des Hauptanspruches.

Zur Verringerung des NOₓ-Gehaltes im Abgas einer mit Luftüberschuß betriebenen Brennkraftmaschine ist das sogenannte Selectiv-Catalytic-Reduction-Verfahren bekannt. Dabei wird an einer Stelle vor einem Katalysator ein Reduktionsmittel in das Abgas eingespritzt und so im Abgas enthaltenes NOₓ in einem Reduktions-Katalysator zu N₂ reduziert. Hierzu sei auf die Veröffentlichung Schöppe et al. "Ein geregeltes Abgasnachbehandlungssystem zur Erfüllung zukünftiger Emissionsgrenzwerte bei PKW-Dieselmotoren", 17. Internat. Wiener Motorensymposium, 1996, Bd. 1, verwiesen. Als Reduktionsmittel kann Ammoniak dienen, aus Gründen der Handhabbarkeit wird üblicherweise eine wässrige Harnstofflösung oder pulverförmiger Harnstoff eingesetzt. Es ist auch bekannt, Kraftstoff oder Derivate als Reduktionsmittel zu verwenden.

Beim bekannten SCR-System wird vom Steuergerät der Brennkraftmaschine fortlaufend die Sollmenge der Reduktionsmitteldosierung berechnet. Dazu benötigt das Steuergerät den momentanen Reduktionsmittelbedarf. Dieser wird aus Betriebsparametern der Brennkraftmaschine, wie Luftmasse, Betriebstemperatur oder Last berechnet. Diese Werte stellen zusammen mit der Katalysatortemperatur die Grundlage zur Reduktionsmitteldosierung dar. Die NOₓ-Reduzierung mittels SCR-System ermöglicht Reduktionsraten über 60%, setzt jedoch die Ermittlung brennkraftmaschinen-individueller Emissionskennfelder voraus, die zur Steuerung der Dosierung in einem Steuergerät hinterlegt sein müssen.

Die NOₓ-Reduzierung erfordert somit einigen apparativen Aufwand mit umfangreichem Datenaustausch zwischen dem Steuergerät der Brennkraftmaschine und dem Reduktionsmitteldosiersystem. Es ist bislang nur mit großem Aufwand möglich, bereits im Verkehr befindliche Fahrzeuge mit mit Luftüberschuß betriebenen Brennkraftmaschinen mit einer Abgasnachbehandlungsanlage nach dem SCR-Prinzip nachzurüsten oder ursprünglich ohne NOₓ-reduzierende Abgasbehandlung entworfene Brennkraftmaschinen mit SCR-Katalysatoren auszurüsten.

Aus der Schrift JP 55093917A (Patents Abstracts of Japan,vol. 004, No. 139 (M-034)) ist eine Vorrichtung zur Reduzierung des NOₓ-Gehaltes im Abgas einer Brennkraftmaschine bekannt, bei der ein Reduktions-Katalysator im Abgastrakt, ein Ammoniakdosiersystem mit einem stromauf des Reduktions-Katalysators im Abgastrakt angeordneten Ammoniak-Einspritzventil sowie ein Temperaturmessaufnehmer zum Erfassen der Temperatur des Katalysators, ein NOₓ-Messaufnehmer zum Erfassen des Noₓ-Gehaltes des Abgases und ein Abgasmengenmessaufnehmer zum Erfassen der Abgasmenge vorgesehen sind. Ein Steuerventil wird in Abhängigkeit von den Messsignalen dieser Messaufnehmer so gesteuert, dass das Einspritzventil eine entsprechende Menge an Reduktionsmittel (Ammoniak) in den Abgastrakt zuführt.

Es ist Aufgabe der vorliegenden Erfindung, eine vereinfachte Vorrichtung zur Reduzierung des NOₓ-Gehaltes im Abgas einer mit Luftüberschuß betriebenen Brennkraftmaschine eines Fahrzeugs zu schaffen, die den Einsatz von nach dem SCR-Prinzip arbeitenden Katalysatoren ohne den Aufwand herkömmlicher Vorrichtungen ermöglicht, insbesondere die Nachrüstung bereits im Verkehr befindlicher Fahrzeuge mit vertretbarem Aufwand gestattet.

Die genannte Aufgabe wird mit den Merkmalen des Hauptanspruchs gelöst. Vorteilhafte Weiterbildungen sind in den Unteransprüchen gekennzeichnet.

Die Vorrichtung zur Reduzierung des NOₓ-Gehaltes im Abgas bildet eine in sich abgeschlossene Einheit. Die Dosierung des Reduktionsmittels erfolgt nicht mehr mit Rückgriff auf im Steuergerät der Brennkraftmaschine vorhandene Daten, sondern wird aus den Signalen eines Volumenstromaufnehmers, eines Temperaturmeßaufnehmers und eines NOₓ-Meßaufnehmers abgeleitet. Dazu wird im Reduktionsmittel-Steuergerät ein allgemein vereinfachtes NOₓ-Kennfeld hinterlegt. Eine Prüfstandsvermessung zur Ermittlung brennkraftmaschinen-individueller Emissionskennfelder kann entfallen. Zur Auslegung der Vorrichtung beim Nachrüsten müssen nur der maximale Volumendurchsatz und der maximal zulässige Abgasgegendruck auf die Brennkraftmaschine berücksichtigt werden. Der einfache Aufbau des Gesamtsystems durch Reduzierung der Sensorik auf die Komponenten

Abgastemperaturmeßaufnehmer, bzw. Katalysatortemperaturmeßaufnehmer, NOₓ-Meßaufnehmer und Volumenstrommeßaufnehmer ermöglicht die Anbringung fast aller Komponenten unmittelbar am SCR-System, wodurch außerdem die bisherige, aufwendige Verkabelung entfällt.

In einer Ausgestaltung der Erfindung wird Harnstoff als Reduktionsmittel aus einem Vorratsbehälter des Reduktionsmitteldosiersystems von einer Pumpe dem Reduktionsmitteleinspritzventil zugeführt. In einer bevorzugten Ausgestaltung dieser Ausführungsform ist ein weiterer Meßaufnehmer vorgesehen, der auf NH₃ als Abgaskomponente empfindlich ist. Es ist aber auch möglich, einen NOₓ-Meßaufnehmer vorzusehen, der betriebstemperaturabhängig empfindlich gegen NH₃ ist. Das Reduktionsmittel-Steuergerät dosiert soviel Harnstoff zu, bis ein vorbestimmter, maximaler NH₃-Gehalt vom Meßaufnehmer angezeigt wird.

In einer weiteren Ausführung der vorliegenden Erfindung wird als Reduktionsmittel Kraftstoff verwendet, den das Reduktionsmitteldosiersystem aus einem Anschluß an die Kraftstoffversorgung der Brennkraftmaschine zum Reduktionsmitteleinspritzventil leitet. In einer bevorzugten Ausgestaltung dieser Ausführungsform ist ein weiterer Meßaufnehmer vorgesehen, der auf HC als Abgaskomponente empfindlich ist. Es kann auch ein NOₓ-Meßaufnehmer verwendet werden, der betriebstemperaturabhängig empfindlich gegen HC ist.

Der Volumenstrommeßaufnehmer kann in einer bevorzugten Ausgestaltung der Erfindung ein Abgasvolumenstrommeßaufnehmer stromauf des Reduktionskatalysators sein. Ein solcher Abgasvolumenstrommeßaufnehmer kann in Form einer Gitterstruktur aufgebaut sein und zusätzlich zur Erzeugung von Turbulenzen genutzt werden, die zur Durchmischung des Abgases mit dem stromauf eingespritzten Reduktionsmittel beitragen. Es ist auch möglich, den Abgasvolumenstrommeßaufnehmer stromab des Katalysators anzuordnen. In einer weiteren Ausführungsform ist ein Volumenstrommeßaufnehmer im Ansaugtrakt der Diesel-Brennkraftmaschine vorgesehen und der Ansaugluftvolumenstrom dient als Maß für den Abgasvolumenstrom. In einer weiteren Ausführungsform der erfindungsgemäßen Vorrichtung sind ein oder mehrere Druckaufnehmer am Reduktions-Katalysator vorgesehen, so daß der Druckverlust oder der Abgasgegendruck am Reduktions-Katalysator als Maß für den Abgasvolumenstrom dient.

In einer Ausführungsform der Erfindung ist weiter ein Drehzahlaufnehmer vorgesehen, dessen Drehzahlinformation zur Überwachung der Funktion des Volumenstrommeßaufnehmers verwendet wird. Das Reduktionsmittel-Steuergerät kann aus dem Signal des Drehzahlaufnehmers den Abgasvolumenstrom abschätzen und mit diesem Wert die Anzeige des Abgasvolumenstromaufnehmers überprüfen. So ist die Diagnose eines fehlerhaften Abgasvolumenstrommeßaufnehmers möglich. In einer bevorzugten Ausgestaltung dieser Ausführungsform ist der Drehzahlaufnehmer ein induktiver Aufnehmer, der sich seine Betriebsspannung intern aus der Induktionsspannung erzeugt, die Drehzahlinformation drahtlos an das Reduktionsmittel-Steuergerät überträgt und somit keinen elektrischen Anschluß an das Fahrzeug benötigt.

Der Einbau des SCR-Katalysators kann im Abgasstrang z.B. anstelle eines Vorschalldämpfers erfolgen. Wird Harnstoff als Reduktionsmittel verwendet, kann die Hydrolyse des Harnstoffes in einem dem Reduktions-Katalysator vorgeschalteten Hydrolyse-Katalysator erfolgen. Es ist aber auch möglich, den Harnstoff in den Abgastrakt stromauf des Reduktions-Katalysators einzuspritzen, so daß die Hydrolyse ganz oder teilweise im heißen Abgas stattfindet.

In einer bevorzugten Ausführungsform der erfindungsgemäßen Vorrichtung besteht der Reduktions-Katalysator aus mehreren in Reihe geschalteten Katalysatoreinheiten und der NOₓ-Meßaufnehmer, der auch betriebstemperaturabhängig empfindlich gegen NH₃ oder HC sein kann, ist stromauf der letzten Katalysatoreinheit angeordnet. Das Reduktionsmittel wird vom Reduktionsmittel-Steuergerät so dosiert, daß ein von der Umwandlungskapazität der letzten, dem Meßaufnehmer nachgeschalteten Katalysatoreinheit abhängiger Meßwert erreicht wird.

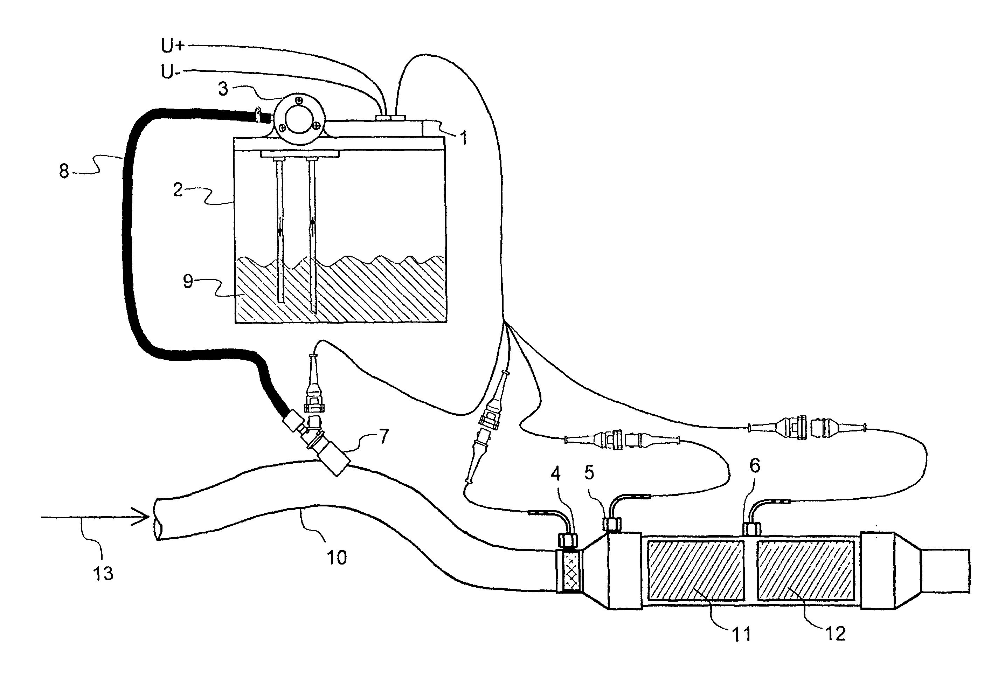

Im folgenden wird die Erfindung anhand der einzigen Figur näher beschrieben.

Das SCR-System weist ein Reduktionsmittel-Steuergerät 1 auf, das einem Harnstoffvorratsbehälter 2 mit Pumpe 3 zugeordnet ist. An das Reduktionsmittel-Steuergerät sind ein Abgasvolumenstrommeßaufnehmer 4, ein Temperaturmeßaufnehmer 5, der die Temperatur des Katalysators oder des Abgases erfaßt, und ein NOₓ-Meßaufnehmer 6 über nicht näher bezeichnete Leitungen angeschlossen. Das Reduktionsmittel-Steuergerät 1 steuert ein Reduktionsmitteleinspritzventil 7 an, dem über eine Schlauchleitung 8 Harnstoff 9 aus dem Harnstoffvorratsbehälter 2 zugeführt wird. Die Reduktionsmitteleinspritzung aus dem Reduktionsmitteleinspritzventil 7 erfolgt in den Abgastrakt 10 einer Diesel-Brennkraftmaschine. Stromab des Reduktionsmitteleinspritzventiles 7 befindet sich der Abgasvolumenstrommeßaufnehmer 4, der Temperaturmeßaufnehmer 5 und zwei SCR-Katalysatoren 11 und 12, zwischen denen ein Meßaufnehmer 6 angeordnet ist, der unterhalb einer gewissen Temperatur empfindlich gegen NOₓ und darüber gegen NH₃ ist. Das Reduktionsmittel-Steuergerät 1 ist an die positive Batteriespannung U+ und die negative Batteriespannung U- des Fahrzeuges angeschlossen. Im Betrieb der Diesel-Brennkraftmaschine (nicht dargestellt), der am Signal des Abgasvolumenstrommeßaufnehmers 4 erkannt wird oder dem Reduktionsmittel-Steuergerät über eine zusätzliche Leitung mitgeteilt werden kann, strömt das Abgas in Richtung des Pfeiles 13. Ausgehend von den Meßwerten für Abgas-/Katalysatortempe-ratur, Abgasvolumenstrom und NOₓ-Gehalt berechnet das Reduktionsmittel-Steuergerät 1 die über die Pumpe 3 und das Reduktionsmitteleinspritzventil 7 einzuspritzende Menge an Harnstoff 9. Bei Einspritzung in den Abgastrakt 10 wird der Harnstoff hydrolysiert und von der Gitterstruktur des Abgasvolumenstromaufnehmers 4 weiter durchmischt. In den Katalysatoren 11 und 12 erfolgt die katalytische Reduktion des NOₓ im Abgas zu N₂. Die in den Abgasstrang der Brennkraftmaschine eingebauten Komponenten, Abgasvolumenstrommeßaufnehmer 4, Temperaturmeßaufnehmer 5, Katalysatoren 11 und 12 sowie NOₓ-Meß-aufnehmer 6 sind nur hinsichtlich maximalem Abgasdurchsatz und maximal zulässigem Abgas-Gegendruck auf die Brennkraftmaschine auszulegen. Das ermöglicht es, die Vorrichtung anstelle eines Vorschalldämpfers bei der Nachrüstung bereits im Verkehr befindlicher Fahrzeuge einzusetzen. Darüber hinaus ist es möglich, ursprünglich ohne NOₓ-Reduktionssysteme konstruierte Brennkraftmaschinen mit dem erfindungsgemäßen SCR-System auszurüsten.

## Patentansprüche

1. Vorrichtung zur Reduzierung des NOₓ-Gehaltes im Abgas einer Brennkraftmaschine, mit:
- mindestens einem nach dem SCR-Prinzip arbeitenden Reduktions-Katalysator (11, 12) im Abgastrakt (10) der Brennkraftmaschine,
- einem Reduktionsmitteldosiersystem mit einem stromauf des Reduktions-Katalysators (11, 12) im Abgastrakt angeordneten Reduktionsmitteleinspritzventil (7) und
- einem Temperaturmessaufnehmer (5), einem NOₓ-Messaufnehmer (6) und einem Volumenstrommessaufnehmer (4), von denen der Temperaturmessaufnehmer (5) die Temperatur des Reduktions-Katalysators (11, 12) oder des Abgases erfasst, der NOₓ-Messaufnehmer (6) den NOₓ-Gehalt des Abgases erfasst und der Volumenstrommessaufnehmer (4) den Abgasvolumenstrom erfasst, um in Abhängigkeit hiervon den Reduktionsmittelbedarf zu ermitteln und das Reduktionsmitteldosiersystem entsprechend zu steuern,
**dadurch gekennzeichnet**,
a) dass sie bei einer mit Luftüberschuss betriebenen Brennkraftmaschine eines Fahrzeuges verwendet wird,
b) dass zusätzlich zu einem Betriebssteuergerät der Brennkraftmaschine ein Reduktionsmittel-Steuergerät (1) vorgesehen ist, an dem der Temperaturmessaufnehmer (5), der NOₓ-Messaufnehmer (6) und der Volumenstrommessaufnehmer (4) unmittelbar angeschlossen sind,
c) dass das Reduktionsmittelsteuergerät (1) an einem Vorratsbehälter (2) für das Reduktionsmittel angebaut ist,
d) dass der Volumenstrommesser (4) im Abgastrakt (10) der Brennkraftmaschine angeordnet ist, und
e) dass das Reduktionsmittel-Steuergerät (1) ohne Rückgriff auf im Betriebssteuergerät zur Verfügung stehende Daten die einzuspritzende Reduktionsmittelmenge bestimmt und das Reduktionsmitteldosiersystem entsprechend ansteuert.

2. Vorrichtung nach Anspruch 1, **dadurch gekennzeichnet, dass** als Reduktionsmittel Harnstoff (9) verwendet wird, und das Reduktionsmitteldosiersystem eine Pumpe (3) aufweist, von der Harnstoff (9) aus dem Vorratsbehälter (2) dem Reduktionsmitteleinspritzventil (7) zugeführt wird.

3. Vorrichtung nach Anspruch 1, **dadurch gekennzeichnet, dass** als Reduktionsmittel Kraftstoff verwendet wird, und das Reduktionsmitteldosiersystem einen Anschluß an die Kraftstoffversorgung der Brennkraftmaschine aufweist, über den Kraftstoff dem Reduktionsmitteleinspritzventil (7) zugeführt wird.

4. Vorrichtung nach einem der vorhergehenden Ansprüche, **dadurch gekennzeichnet, dass** das Reduktionsmittel-Steuergerät (1) unmittelbar an einen weiteren Abgas-Messaufnehmer angeschlossen ist, der auf eine weitere Abgaskomponente, insbesondere NH₃ oder HC, empfindlich ist.

5. Vorrichtung nach einem der Ansprüche 1, 2 und 4, **dadurch gekennzeichnet, dass** der NOₓ-Meßaufnehmer (6) betriebstemperaturabhängig empfindlich gegen NH₃ ist.

6. Vorrichtung nach einem der Ansprüche 1, 3 und 4, **dadurch gekennzeichnet, dass** der.NOₓ-Meßaufnehmer (6) betriebstemperaturabhängig empfindlich gegen HC ist.

7. Vorrichtung nach einem der vorherigen Ansprüche, **dadurch gekennzeichnet, dass** weiter ein Drehzahlmeßaufnehmer an das Reduktionsmittel-Steuergerät (1) angeschlossen ist und dass das Reduktionsmittel-Steuergerät (1) dessen Messwert zur Überwachung der Funktion des Volumenstrommeßaufnehmers (4) verwendet.

8. Vorrichtung nach Anspruch 7, **dadurch gekennzeichnet, dass** der Drehzahlaufnehmer ein induktiver Sensor ist, der die Drehzahlinformation drahtlos an das Reduktionsmittel-Steuergerät (1) überträgt, seine Betriebsspannung aus der Induktionsspannung erzeugt und dadurch keinen elektrischen Anschluß an das Fahrzeug hat.

9. Vorrichtung nach einem der Ansprüche 2, 4, 5, 7 und 8, **dadurch gekennzeichnet, dass** der gegen NH₃ empfindliche Messaufnehmer im Reduktions-Katalysator (11, 12) angeordnet ist und das Reduktionsmittel-Steuergerät (1) so viel Harnstoff (9) zudosiert, bis ein vorbestimmter, maximaler NH₃-Gehalt angezeigt wird.

10. Vorrichtung nach einem der vorherigen Ansprüche, **dadurch gekennzeichnet, dass** das Reduktionsmittel-Steuergerät (1) so viel Reduktionsmittel (9) zudosiert, bis ein vorbestimmter, minimaler NOₓ-Gehalt vom NOₓ-Messaufnehmer (6) angezeigt wird.

11. Vorrichtung nach einem der vorherigen Ansprüche, **dadurch gekennzeichnet, dass** der Reduktions-Katalysator (11, 12) aus zwei oder mehreren in Reihe geschalteten Katalysatoreinheiten (11, 12) besteht und dass der NOₓ-Messaufnehmer (6) stromauf der letzten Katalysatoreinheit angeordnet ist.

12. Vorrichtung nach Anspruch 5, 9 und 11 oder 6, 10 und 11, **dadurch gekennzeichnet, dass** der vorbestimmte NH₃- bzw. NOₓ-Gehalt von der Umwandlungkapazität der dem Messaufnehmer (6) nachgeschalteten Katalysatoreinheit (12) abhängt.

13. Vorrichtung nach einem der Ansprüche 1, 2, 4 bis 12, die als Reduktionsmittel Harnstoff verwendet, **dadurch gekennzeichnet, dass** zur Hydrolyse des Harnstoffes (9) das Reduktionsmitteleinspritzventil (7) die Harnstoffeinspritzung in einen dem Reduktions-Katalysator (11, 12) vorgeschalteten Hydrolysekatalysator bewirkt.

14. Vorrichtung nach einem der Ansprüche 1, 2, 4 bis 12, die als Reduktionsmittel Harnstoff verwendet, **dadurch gekennzeichnet, dass** das Reduktionsmitteleinspritzventil (7) den Harnstoff (9) in den Abgastrakt (10) stromauf des Reduktions-Katalysators (11, 12) einspritzt und dass die Hydrolyse des Harnstoffes (9) im heißen Abgastrakt erfolgt.

15. Vorrichtung nach einem der vorherigen Ansprüche, **dadurch gekennzeichnet, dass** sie nur hinsichtlich maximalem Abgasdurchsatz und -gegendruck auf die Brennkraftmaschine angepasst werden muß, wobei keine Vermessung auf einem Prüfstand erforderlich ist.

16. Vorrichtung nach einem der vorherigen Ansprüche, **dadurch gekennzeichnet, dass** sie als abgeschlossene Einheit für die Nachrüstung oder für ursprünglich ohne NOₓ-reduzierende Abgasbehandlung entworfene Brennkraftmaschinen ausgebildet ist.

17. Vorrichtung nach Anspruch 11, **dadurch gekennzeichnet, dass** die Vorrichtung zum Einbau anstelle eines Vorschalldämpfers ausgebildet ist.

## Claims

1. Apparatus for reducing the NOₓ content in exhaust gas of an internal combustion engine, with:
- at least one reduction catalytic converter (11, 12) working on the SCR principle in the exhaust gas tract (10) of the internal combustion engine,
- one reduction agent dosing system with a reduction agent injection valve (7) arranged upstream of the reduction catalytic converter (11, 12) in the exhaust gas tract and
- a temperature sensor (5), an NOₓ sensor (6) and a volume flow sensor (4), of which the temperature sensor (5) determines the temperature of the reduction catalytic converter (11, 12) or of the exhaust gas, the NOₓ sensor (6) determines the NOₓ content of the exhaust gas and the volume flow sensor (4) determines the exhaust gas volume flow, in order as a function hereof to determine the reduction agent requirement and to control the reduction agent dosing system accordingly, **characterised in that**
a) it is used in the case of an internal combustion engine of a vehicle being operated with an excess of air,
b) in addition to an operating control device of the internal combustion engine a reduction agent control device (1) is provided, to which the temperature sensor (5), the NOₓ sensor (6) and the volume flow sensor (4) are directly connected,
c) the reduction agent control device (1) is mounted on a container (2) for the reduction agent,
d) the volume flow meter (4) is arranged in the exhaust gas tract (10) of the internal combustion engine, and
e) the reduction agent control device (1) determines the quantity of reduction agent to be injected without reference to data available in the operating control device and controls the reduction agent dosing system accordingly.

2. Apparatus according to Claim 1, **characterised in that** urea (9) is used as a reduction agent, and the reduction agent dosing system has a pump (3) from which urea (9) is fed from the container (2) to the reduction agent injection valve (7).

3. Apparatus according to Claim 1, **characterised in that** fuel is used as a reduction agent, and the reduction agent dosing system has a connection to the fuel supply of the internal combustion engine, via which fuel is fed to the reduction agent injection valve (7).

4. Apparatus according to one of the preceding claims, **characterised in that** the reduction agent control device (1) is connected directly to another exhaust gas sensor which is sensitive to another exhaust gas component, in particular NH₃ or HC.

5. Apparatus according to one of Claims 1, 2 and 4, **characterised in that** the NOₓ sensor (6) is sensitive to NH₃ as a function of operating temperature.

6. Apparatus according to one of Claims 1, 3 and 4, **characterised in that** the NOₓ sensor (6) is sensitive to HC as a function of operating temperature.

7. Apparatus according to one of the preceding claims, **characterised in that** a speed sensor is also connected to the reduction agent control device (1) and that the reduction agent control device (1) uses the speed sensor's measured value to monitor the function of the volume flow sensor (4).

8. Apparatus according to Claim 7, **characterised in that** the speed sensor is an inductive sensor which transfers the speed data in wireless fashion to the reduction agent control device (1), generates its operating voltage from the induction voltage and as a result has no electrical connection to the vehicle.

9. Apparatus according to one of Claims 2, 4, 5, 7 and 8, **characterised in that** the sensor which is sensitive to NH₃ is arranged in the reduction catalytic converter (11, 12) and the reduction agent control device (1) doses out urea (9) until a predetermined maximum NH₃ content is displayed.

10. Apparatus according to one of the preceding claims, **characterised in that** the reduction agent control device (1) doses out reduction agent (9) until a predetermined minimum NOₓ content is displayed by the NOₓ sensor (6).

11. Apparatus according to one of the preceding claims, **characterised in that** the reduction catalytic converter (11, 12) consists of two or more catalytic converter units (11, 12) connected in series and that the NOₓ sensor (6) is arranged upstream of the last catalytic converter unit.

12. Apparatus according to Claims 5, 9 and 11 or 6, 10 and 11, **characterised in that** the predetermined NH₃ or NOₓ content depends on the conversion capacity of the catalytic converter unit (12) arranged downstream of the sensor (6).

13. Apparatus according to one of Claims 1, 2, 4 to 12, which uses urea as a reduction agent, **characterised in that** for hydrolysis of the urea (9) the reduction agent injection valve (7) effects the injection of urea into a hydrolysis catalytic converter upstream of the reduction catalytic converter (11, 12).

14. Apparatus according to one of Claims 1, 2, 4 to 12, which uses urea as a reduction agent, **characterised in that** the reduction agent injection valve (7) injects the urea (9) into the exhaust gas tract (10) upstream of the reduction catalytic converter (11, 12) and that the hydrolysis of the urea (9) takes place in the hot exhaust gas tract.

15. Apparatus according to one of the preceding claims, **characterised in that** it need only be adjusted to the internal combustion engine in respect of a maximum exhaust gas throughput and exhaust gas back pressure, whereby no measurement is required on a test-bed.

16. Apparatus according to one of the preceding claims, **characterised in that** it is designed as a closed unit for retrofitting or for internal combustion engines originally designed without facilities for treating NOₓ-reducing exhaust gases.

17. Apparatus according to Claim 11, **characterised in that** the apparatus is designed for installation instead of a presilencer.

## Revendications

1. Dispositif de réduction de la teneur en NOₓ dans les gaz d'échappement d'un moteur à combustion interne, comprenant :
- au moins un catalyseur de réduction (11, 12) fonctionnant suivant le principe SCR et disposé dans la ligne de gaz d'échappement (10) du moteur à combustion interne,
- un système d'apport dosé d'agent de réduction comportant un injecteur d'agent de réduction (7) disposé en amont du catalyseur de réduction (11, 12) dans la ligne de gaz d'échappement et
- un capteur de mesure de température (5), un capteur de mesure de NOₓ (6) et un débitmètre volumique (4), dont le capteur de mesure de température (5) détecte la température du catalyseur de réduction (11, 12) ou des gaz d'échappement, le capteur de mesure de NOₓ (6) détecte la teneur en NOₓ des gaz d'échappement et le débitmètre volumique (4) détecte le débit volumique de gaz d'échappement, afin de déterminer, en fonction de ceux-ci, le besoin en agent de réduction et de commander en conséquence le système d'apport dosé d'agent de réduction,
**caractérisé**
a) en ce qu'il est utilisé dans le cas d'un moteur à combustion interne de véhicule, qu'on fait fonctionner avec un excès d'air,
b) en ce que, outre un appareil de commande de fonctionnement du moteur à combustion interne, il est prévu un appareil de commande d'agent de réduction (1) auquel le capteur de mesure de température (5), le capteur de mesure de NOₓ (6) et le débitmètre volumique (4) sont directement raccordés,
c) en ce que l'appareil de commande d'agent de réduction (1) est monté sur un réservoir de stockage (2) prévu pour l'agent de réduction,
d) en ce que le débitmètre volumique (4) est disposé dans la ligne de gaz d'échappement (10) du moteur à combustion interne et
e) en ce que, sans avoir recours à des données disponibles dans l'appareil de commande de fonctionnement, l'appareil de commande d'agent de réduction (1) détermine le débit d'agent de réduction à injecter et commande en conséquence le système d'apport dosé d'agent de réduction.

2. Dispositif suivant la revendication 1, **caractérisé en ce que** du carbamide (9) est utilisé en tant qu'agent de réduction et le système d'apport dosé d'agent de réduction comprend une pompe (3) par laquelle du carbamide (9) est envoyé à l'injecteur d'agent de réduction (7) à partir du réservoir de stockage (2).

3. Dispositif suivant la revendication 1, **caractérisé en ce que** du carburant est utilisé en tant qu'agent de réduction et le système d'apport dosé d'agent de réduction comporte un raccordement à l'alimentation en carburant du moteur à combustion interne, par l'intermédiaire duquel du carburant est envoyé à l'injecteur d'agent de réduction (7).

4. Dispositif suivant l'une des revendications précédentes, **caractérisé en ce que** l'appareil de commande d'agent de réduction (1) est raccordé directement à un autre capteur de mesure de gaz d'échappement qui est sensible à un autre composant de gaz d'échappement, notamment NH₃ ou HC.

5. Dispositif suivant l'une des revendications 1, 2 et 4, **caractérisé en ce que** le capteur de mesure de NOₓ (6) est sensible vis-à-vis de NH₃ d'une manière dépendant de la température de fonctionnement.

6. Dispositif suivant l'une des revendications 1, 3 et 4, **caractérisé en ce que** le capteur de mesure de NOₓ (6) est sensible vis-à-vis de HC d'une manière dépendant de la température de fonctionnement.

7. Dispositif suivant l'une des revendications précédentes, **caractérisé en ce qu'**en outre, un capteur de mesure de vitesse de rotation est raccordée à l'appareil de commande d'agent de réduction (1) et **en ce que** l'appareil de commande d'agent de réduction (1) utilise la valeur de mesure de ce capteur pour surveiller le fonctionnement du débitmètre volumique (4).

8. Dispositif suivant la revendication 7, **caractérisé en ce que** le capteur de vitesse de rotation est un capteur inductif qui transmet sans fil l'information de vitesse de rotation à l'appareil de commande d'agent de réduction (1), produit sa tension de fonctionnement à partir de la tension d'induction et ne présente de ce fait aucun raccordement électrique au véhicule.

9. Dispositif suivant l'une des revendications 2, 4, 5, 7 et 8, **caractérisé en ce que** le capteur de mesure sensible vis-à-vis de NH₃ est disposé dans le catalyseur de réduction (11, 12) et réalisme un apport dosé de suffisamment de carbamide jusqu'à ce qu'une teneur en NH₃ maximale préfixée soit indiquée.

10. Dispositif suivant l'une des revendications précédentes, **caractérisé en ce que** l'appareil de commande d'agent de réduction (1) réalise un apport dosé de suffisamment d'agent de réduction (9) jusqu'à ce qu'une teneur en NOₓ minimale préfixée soit indiquée par le capteur de mesure de NOₓ (6).

11. Dispositif suivant l'une des revendications précédentes, **caractérisé en ce que** le catalyseur de réduction (11, 12) est constitué de deux unités de catalyseur (11, 12) ou davantage montées en série et **en ce que** le capteur de mesure de NOₓ (6) est disposé en amont de la dernière unité de catalyseur.

12. Dispositif suivant la revendication 5, 9 et 11 ou 6, 10 et 11, **caractérisé en ce que** la teneur en NH₃ ou NOₓ préfixée dépend de la capacité de transformation de l'unité de catalyseur (12) montée en aval du capteur de mesure (6).

13. Dispositif suivant l'une des revendications 1, 2, 4 à 12, qui utilise du carbamide en tant qu'agent de réduction, **caractérisé en ce que**, pour l'hydrolyse du carbamide (9), l'injecteur d'agent de réduction (7) effectue l'injection de carbamide dans un catalyseur d'hydrolyse monté en amont du catalyseur de réduction (11, 12).

14. Dispositif suivant l'une des revendications 1, 2, 4 à 12, qui utilise du carbamide en tant qu'agent de réduction, **caractérisé en ce que** l'injecteur d'agent de réduction (7) injecte le carbamide (9) dans la ligne de gaz d'échappement (10) en amont du catalyseur de réduction (11, 12) et **en ce que** l'hydrolyse du carbamide (9) a lieu dans la ligne de gaz d'échappement chauds.

15. Dispositif suivant l'une des revendications précédentes, **caractérisé en ce qu'**il n'a à être adapté au moteur à combustion interne qu'en ce qui concerne le débit de gaz d'échappement maximal et la contre-pression de gaz d'échappement maximale, aucun relevé de mesure sur un banc d'essai n'étant nécessaire.

16. Dispositif suivant l'une des revendications précédentes, **caractérisé en ce qu'**il est réalisé en tant qu'unité fermée pour l'équipement après coup ou pour des moteurs à combustion interne conçus initialement sans traitement de gaz d'échappement réduisant les NOₓ.

17. Dispositif suivant la revendication 11, **caractérisé en ce que** le dispositif est réalisé pour être monté à la place d'un silencieux amont.
